# EUROPEAN PATENT APPLICATION

(11) **EP 0 962 302 A1**
(43) Date of publication of application: **08.12.1999**
(21) Application number: 98830337.6
(22) Date of filing: 01.06.1998
(51) Int. Cl.: B29D 30/06, A63C 17/22

(54) **Process for making tyres, in particular for roller skates and the like**

(71) Applicant: Vibram S.p.A., 21041 Albizzate (Varese) (IT); Tema Technopolymers S.r.l., 24040 Pontirolo Nuovo (Bergamo) (IT)
(72) Inventor: Auci, Pietro, 24040 Verdellino-Zingonia (Bergamo) (IT)
(74) Representative: Sutto, Luca

(57) **Abstract**

A process for making tyres is described which comprises a step of manufacturing at least one first and at least one second shell half (2, 3), intended for defining respective sidewalls of a tyre to be manufactured, a step of moving the first and second shell halves (2, 3) close to each other at symmetric positions relative to an equatorial plane of the tyre to be made, and a step of applying a tread band (5) to radially outer end portions (6, 7) of the first and second shell halves previously moved close to each other. Also described is a tyre consisting of two shell halves (2, 3) disposed close to each other and circumferentially joined together by a tread band (5).

## Description

The present invention relates to a process for making tyres for roller skates, cycles and similar non power-driven means of transport.

The invention also relates to a tyre obtained by the above process.

It is to note that tyres being the subject matter of the invention particularly apply to roller skates both of the traditional type and more specifically of the type in which rollers are disposed in aligned relationship, although use of these tyres for other types of non power-driven means of transport, such as bicycles and the like is not excluded.

It is known that rollers or wheels for skates are presently manufactured by pouring suitable resins, polyurethanes for example, into conveniently shaped moulds. In particular, the resin is poured around a previously manufactured hub and subsequently, once the resin forming the compact roller has been suitably cross-linked, working operations are carried out for material removal (trimming and grinding operations) so that the definitive shape of the roller itself is obtained. Typically, lathe operations are carried out so that the outer surface of the roller itself is conveniently formed and, if required, a region provided with one or more grooves, which region corresponds to the ground-contacting area, is obtained. This type of production technique, although widely used, enables products having limited aesthetic and technical features to be obtained. It is in fact to note that rollers thus obtained are made of a single material of predetermined mechanical features and therefore capable of only partly meeting the differentiated requirements actually needed by each part of the roller itself in order to ensure optimal overall performance.

In addition, from an aesthetic point of view, it is apparent that the above described technology is capable of making only monochrome and smooth rollers (in order to avoid surface air bubbles), unless subsequent surface painting/decorating/working operations are carried out.

In an attempt to solve the above listed drawbacks and restrictions at least partly, Tema Tecnopolymers S.r.l. itself has recently made rollers consisting of two materials differentiated from each other. This type of wheels for roller skates was obtained by injection moulding of appropriate resins, carrying out a first injection with a first elastomer material, normally having good mechanical performance in terms of elasticity and substantially defining the tyre body, and a second injection, subsequent to the preceding one, normally carried out with a softer elastomer material so as to form the tyre tread that preferably must have good features in terms of grip.

This type of manufacturing technique has surely enabled quite improved rollers to be made relative to the previously described ones, in that it has made it possible to select the most appropriate materials for making both the wheel structural parts and the tread band, thereby bringing about an improvement in the whole wheel performance. In addition, from a merely aesthetic point of view, due to the two injections, any chromatic effect could be obtained on the roller, inscriptions and/or ornamental patterns being possible both on the tread band and, if wished, on the tyre sidewalls.

While this second manufacturing technique has surely enabled good products to be obtained, it appeared that this technique too could be further improved and that at all events it had some drawbacks.

First of all, this second technology too typically allows wheels or rollers of solid section to be manufactured. This solution primarily gives rise to a poor comfort during the wheel use because, although the roller is made of materials expressly studied as regards their features in terms of shock absorption capability and reduced compression set, it is at all events hardly capable of ensuring an efficient absorption and damping of vertical stresses. It is clear that this limitation has negative repercussions on an user to which vibrations and continuous stresses are transmitted during riding, which will bring about repercussions as regards both the muscular system and the bony system. In addition, wheels of solid section, due to their own nature, have a high mass. Furthermore, the described wheels involve a great material consumption for manufacturing the toroidal portion of elastomer material.

It is also to point out that when the above described manufacture of two-material wheels is concerned, use of relatively complicated moulds is required which will have repercussions on the overall tyre costs.

It is finally apparent that the tyre stiffness and mechanical properties are in any case directly linked to the typology of the resin(s) used in the tyre manufacture, since these features cannot be at all modified either during the production steps or by the user without changing the materials therein employed.

In other words, after a given material and a given shape have been selected both for the tyre body and the tread band, the tyre thus manufactured has predetermined and inalterable features.

In addition to the above described products, there are also on the market wheels having an air tube (or a previously prepared foamed material) positioned on a rigid hub and then housed within a polyurethane envelope applied by pouring or casting into appropriate moulds. These products involve additional operating steps for the air tube positioning and furthermore they have all the limitations typical of the products obtained by casting (trimming operations are needed, tread bands or chromatic effects cannot be obtained).

Under this situation, it is a main object of the present invention to provide a process for tyre manufacture and a tyre obtained by this process which are capable of substantially solving all the above mentioned drawbacks and limits.

In particular, it is a fundamental object of the invention to provide a process of easy and cheap setting-up which enables tyres of high technical qualities to be made, with the possibility of varying the stiffness features of same, the employed materials being the same, and without requiring use of an air tube. It is a further object of the invention to provide a process and a tyre to be manufactured with a great material-saving and with the possibility of obtaining any type of performance, geometrical shape and aesthetic effect.

The foregoing and further objects are substantially achieved by a process and a tyre in accordance with the appended claims.

Further features and advantages will become more apparent from the following detailed description of some preferred non-exclusive embodiments of a process and a tyre thus obtained, This description is taken hereinafter with reference to the accompanying drawings given by way of non-limiting example, in which:
- Figs. 1 to 4 show different embodiments of a tyre in accordance with the invention, seen in section along a meridian line;
- Figs. 5 to 7 show subsequent steps of the process in reference, still in section.

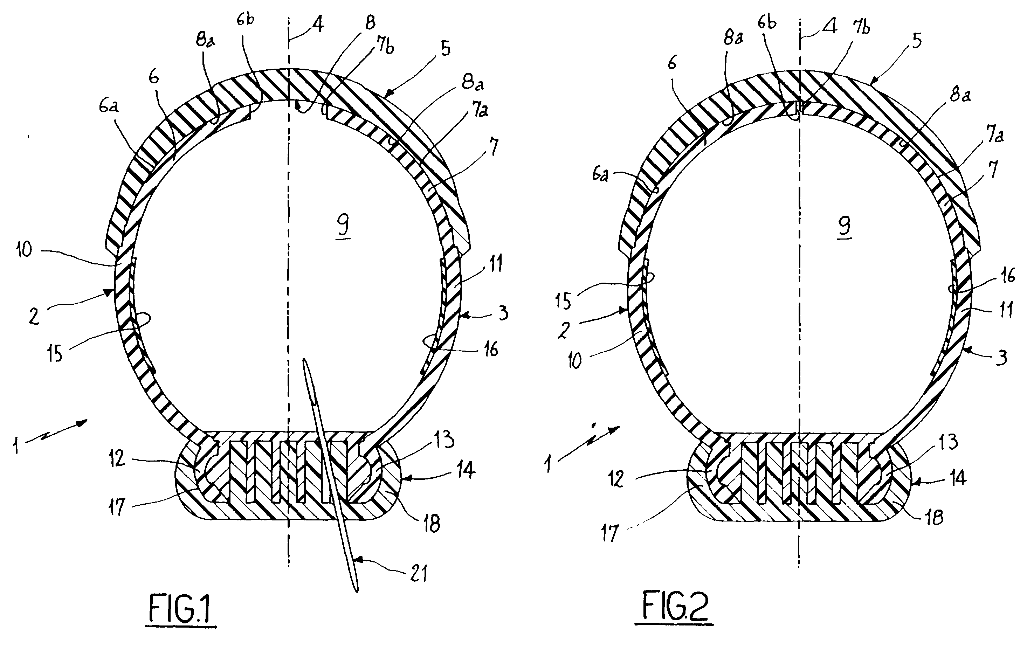

With reference to the drawings and in particular to Figs. 1 to 4, a tyre for skates, cycles and similar non power-driven means of transport in accordance with the present invention has been generally identified by reference numeral 1. In an original manner, tyre 1 consists of at least a first and a second shell halves 2 and 3 disposed symmetrically relative to an equatorial plane 4 of the tyre.

A tread band 5 is then peripherally connected to the first and second shell halves 2, 3 at radially outer end portions 6, 7 of these shell halves. More specifically, the tread band 5 has a side 8 turned towards the two shell halves where a connecting surface 8a is defined which integrally engages corresponding connecting surfaces 6a, 7a peripherally defined on the radially outer end portions 6, 7 of the first and second shell halves.

In this manner, the tread band 5 and shell halves 2, 3 identify a toroidal cavity 9 of predetermined volume into which air or other gas at the desired pressure can be introduced, as better clarified in the following of the present description.

Each shell half 2, 3 has a substantially curved conformation in a meridian section plane. More specifically, each shell half, radially moving from the outside to the inside, is defined by the respective radially outer end portion connected with the tread band, by a side band 10, 11 consecutive to the radially outer end portion and defining a corresponding tyre sidewall, and by a radially inner end portion 12, 13, in turn consecutive to the respective side band and arranged to engage a tyre rim 14.

Advantageously, the first and second shell halves are preferably identical with each other so that they can be obtained by a single operation.

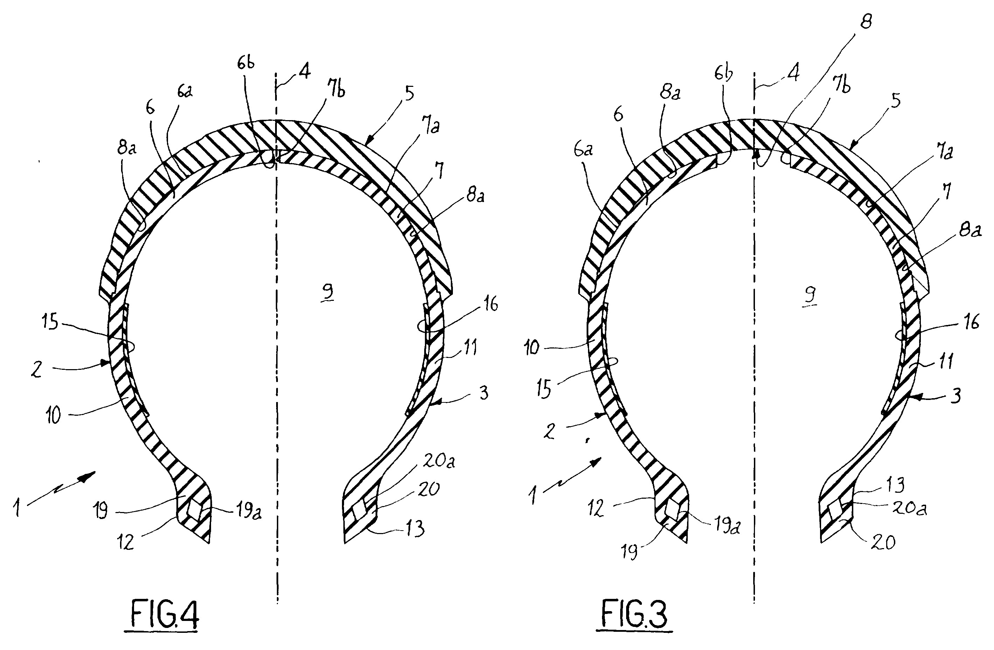

In more detail, it is to note that the radially outer end portions 6, 7 of each shell half can have edges 6b, 7b disposed mutually in side by side relationship, i.e. in contact with each other or in close proximity to each other, as shown in the examples of Figs. 2 and 4. Alternatively, these radially outer end portions can have mutually facing edges 6b, 7b located at a predetermined distance from each other, as shown in Figs. 1 and 3.

It is in fact important to note that connection between the two shell halves 2 and 3 is substantially carried out by the tread band 5 mechanically and chemically engaging the radially outer end portions of each shell half, so that an appropriate gas tightness (the gas being air, for example) is achieved, which gas can be inserted under pressure into the toroidal cavity 9.

With reference to the side bands 10, 11 of each shell half, it is to note that possible stiffening bands 15, 16 can be there provided which consist of structures of composite material for example to be preferably applied to a surface of the shell half turned inwardly of the toroidal cavity 9. Obviously, the structure of these bands 15, 16 can be optimized depending on requirements and the tyre sizes.

Now, the structure of rim 14 to which the tyre is anchored at the radially inner end portions 12, 13 of each shell half will be analysed in more detail, the following possible variant solutions being envisaged.

In particular, with reference to Figs. 1 and 2, the radially inner end portions 12, 13 of each shell half are provided to be buried into corresponding axially-opposite perimetric anchoring regions 17, 18 of the tyre rim.

Alternatively, the radially inner end portions 12, 13 may be provided with corresponding anchoring beads 19, 20 (see Figs. 3 and 4) for engagement with a rim to be manufactured separately from the remaining portions of the tyre. In this case each anchoring bead will be comprised of circumferential stiffening elements 19a, 20a, such as bead cores of metal material for example, intended for carrying out engagement of the tyre with corresponding anchoring edges provided on the rim (not shown), under conditions of appropriate pressure existing within the toroidal cavity 9.

It is finally to note that the toroidal cavity 9 of the tyre in question can be filled with gas, such as air for example, under given variable pressures depending on the features that are wished to be given to the tyre, Thus a greater inflation and consequently a higher pressure can be provided if a greater stiffness is wished to be given to the tyre, or lower pressure conditions can be used if the tyre is wished to have a lower stiffness and therefore a greater region of the tread in contact with the ground during running.

For the purpose of carrying out inflation of the toroidal cavity 9, adjustment means 2 is provided which consists for example of a needle valve (see example in Fig. 1) to be operated by the user and on the outer connection of which the user can act by employment of usual pressurized gas-delivery systems such as pumps or bottles.

As an alternative solution to the above description, the toroidal cavity may be fully or partly occupied by a filling of appropriate structural features and in particular having suitable stiffness and elasticity to give the tyre the necessary mechanical features.

It is also an object of the present invention a process for manufacturing tyres of a type in compliance with the above descriptions and the illustrations in Figs. 1 to 4.

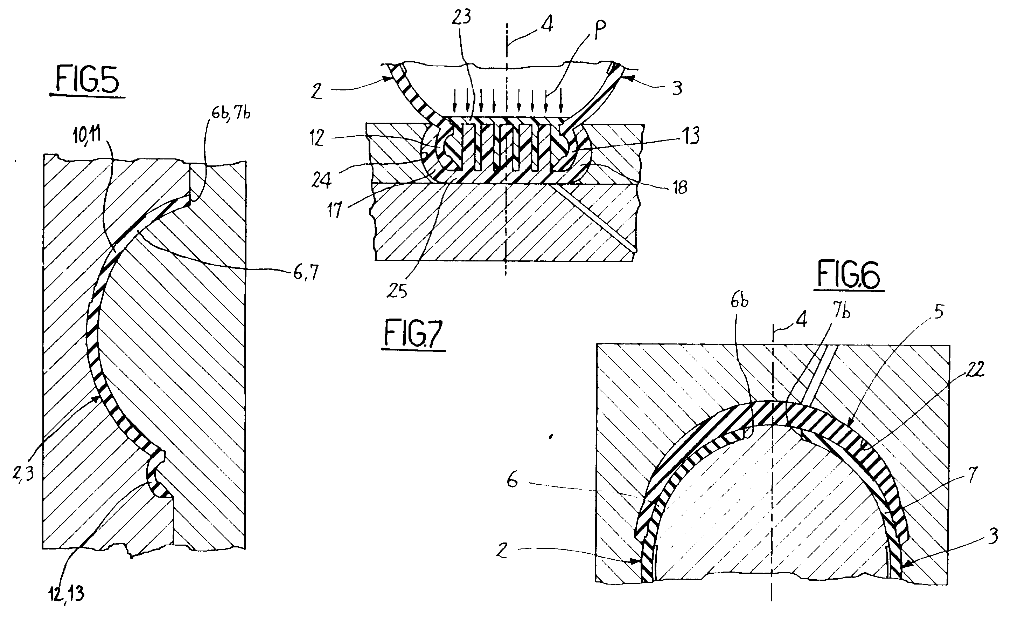

The important steps of an illustrative embodiment of the process being the object of the invention are diagrammatically described in Figs. 5 to 7.

In more detail, the process comprises a first step in which at least the first and second shell halves 2, 3 intended to form the respective sidewalls of the tyre to be manufactured are made.

More specifically, the step of making said halves preferably takes place by injection moulding of a first elastomer resin, an appropriate injectable thermoplastic polyurethane resin (TPU) such as, by way of example, the product marketed by Tema Technopolymers, trademark RUBTANE ®.

It is to note that during this moulding step a plurality of shell halves will be simultaneously obtained by a single operating step.

It is also to note that, since the shell halves are identical with each other the manufacturing operations of these shell halves by injection moulding are very easy.

Alternatively the shell halves may also be made by pouring of appropriate materials such as rubber or the like.

After having manufactured at least one first and one second shell halves, these shell halves are disposed close to each other in a symmetric position relative to an equatorial plane 4 of the tyre to be made and then application of a tread band 5 is carried out at the radially outer end portions 6, 7 of the first and second shell halves.

Application of the tread band 5 accomplishes a mechanical and chemical connection between the shell halves and defines a toroidal cavity 9 with them, in which cavity gas under pressure or another filling material can be subsequently introduced.

It is to note that the tread band is mechanically connected to the shell halves either directly or after interposition of a suitable layer of adhesive material and it is not only intended for carrying out the necessary connection between the two shell halves and therefore for ensuring the structural integrity of the tyre, but also for ensuring a hermetic seal at the mutual-connection surfaces between the shell halves and the tread band.

From a construction point of view, the tread band can be obtained separately from the remaining portions by injection moulding and then glued to the shell halves. Alternatively, as shown in Fig. 6, the tread band can be moulded over the previously made shell halves. More specifically, after having inserted the two previously made shell halves into appropriate moulds and having brought these shell halves to the suitable position of mutual axial approaching in which the moulds form a hollow space 22 the shape of which matches that of the tread band and which is disposed circumferentially of the radially outer end portions of the shell halves, injection of a second elastomer resin (TPU, for example) is carried out at said hollow space in order to define the tread band that in this way will be connected to the shell halves.

According to a further alternative solution, the tread band can be made by first arranging a strip of a second elastomer resin in a raw state; subsequently the strip is positioned circumferentially of the first and second shell halves disposed mutually close to each other so that the strip itself is brought into at least partial overlapping relationship of the radially outer end portions of the shell halves, thereby obtaining an intermediate workpiece, At this point the intermediate workpiece will be inserted into a mould for vulcanization and shaping of the tread band, for example of a type provided with moving radial sectors. This mould will then be submitted to a pressure action and to thermal cycles adapted to obtain vulcanization of the strip applied to the shell halves, carrying out cross-linking and definitive shaping of the tread band as well as mechanical and chemical connection of the latter to the shell halves.

These steps are usually carried out in conveniently sized autoclaves, At this point withdrawal of the tyre from the vulcanization mould can be executed and other subsequent cleaning or surface-treatment operations may be carried out.

It is to note that during moulding of the shell halves or even subsequently of this operation, a step may be provided for applying at least one stiffening band made of a composite material for example and disposed at an inner surface of each shell half close to the sidewall of the tyre to be made.

After both associating the tread band with the shell halves and applying optional stiffening bands to the sidewalls, a further step is provided for anchoring a rim at the radially inner end portions of each shell half.

Fastening to the rim can merely take place by engagement of the end portions with a previously made separate rim, should for example the radially inner end portions be provided with an anchoring bead (see Figs. 3 and 4).

Alternatively, if the tyre is of the type shown in Figs. 1 and 2, an abutment half portion 23 of the rim is to be made, which half portion can be produced separately from all the above described steps. This half portion then will be coupled with the previously made tyre and afterwards the whole assembly will be introduced into an appropriate mould for injection which, once the shell halves and the abutment half portion have been suitably positioned will define a space 24 the shape of which substantially matches that of a locking half portion 25 of the rim.

At this point injection either of a plastic material of appropriate mechanical features or of still another material will be carried out, for making the rim and also, in a single step, obtaining mechanical anchoring of the radially inner end portions 12, 13 to the rim itself.

It is to note that during this injection step a predetermined pressure "P" may be provided to act on the abutment half portion of the rim in order to counterbalance pressure exerted by the material injection for formation of the locking half portion 25 of said rim.

The invention achieves important advantages.

Firstly, it is to note that the tyre in question is capable of meeting any operating requirement, since the tyre stiffness can be modified by merely acting on the gas pressure existing inside the toroidal cavity. The above without air tubes or a complicated manufacturing process being required. In addition, due to the presence of the toroidal cavity in which gas under pressure can operate, the tyre has really excellent features in terms of elasticity and shock absorption capability. It is also to point out that, due to its structure, the tyre and consequently the wheel to which it will be applied are very light-in-weight, which will clearly reduce the weight of the products (skates, bicycles) on which these wheels are to be mounted. On the contrary, the process in question is of simple accomplishment and cheap setting up, offering the possibility of making tyres for roller skates or non power-driven cycles very easily and at high production rates. In this connection it is to note that tyres directly incorporating the rim can be easily made without any assembling step being required.

In addition, it is also of the greatest importance the fact that, notwithstanding the simple production, differentiations can also be obtained in terms of material between the shell halves and the tread band, therefore giving each part of the tyre the features that better comply with the particular use requirements.

It is also to point out that the tyre in question is capable of meeting any aesthetic requirement, in that it is possible to select the shape and colours of the tread band and each of the shell halves as well as of the rim without jeopardizing the production costs.

## Claims

1. A process for making tyres, characterized in that it comprises the following steps:
- making at least one first and at least one second shell halves (2, 3) intended for defining respective sidewalls of a tyre to be manufactured;
- moving the first and second shell halves (2, 3) close to each other at symmetric positions relative to an equatorial plane (4) of the tyre to be manufactured;
- applying a tread band (5) to the radially outer end portions (6, 7) of the first and second shell halves previously moved close to each other.

2. A process as claimed in claim 1, characterized in that said thread band (5) is applied to said radially outer end portions (6, 7) to make a mechanical and chemical connection between the shell halves and the tread band.

3. A process as claimed in claim 1, characterized in that said shell halves (2, 3) are made of a first elastomer resin, preferably by injection moulding or by pouring or casting into appropriate moulds.

4. A process as claimed in any one of the preceding claims, characterized in that application of said tread band (5) is obtained by the following sub-steps:
- inserting shell halves into appropriate moulds in a position of mutual axial approaching, said moulds creating a hollow space (22) the shape of which matches that of the tread band and which is disposed circumferentially of the radially outer end portions of the shell halves;
- injecting a second elastomer resin at said hollow space so as to define said tread band (5).

5. A process as claimed in claim 1 or 3, characterized in that application of said tread band is obtained by the following sub-steps:
- arranging a strip of a second elastomer resin in a raw state;
- positioning said strip circumferentially of the first and second shell halves (2, 3) disposed in mutual side by side relationship, said strip being positioned in partly overlapping relationship with radially outer end portions (6, 7) of said shell halves to make an intermediate workpiece;
- inserting the intermediate workpiece into a mould for vulcanization and shaping of the tread band (5), of the type provided with moving radial sectors for example;
- vulcanizing the strip applied to the shell halves for obtaining cross-linking and definitive shaping of the tread band, as well as mechanical and chemical connection of said tread band with the shell halves;
- withdrawing the tyre from the vulcanization mould.

6. A process as claimed in claim 1, characterized in that during moulding of said shell halves, or subsequently to this moulding, a step is provided for applying at least one stiffening band (15; 16) disposed at an inner surface of each shell half (2; 3) close to the sidewall of the tyre to be manufactured.

7. A process as claimed in claim 1, characterized in that subsequently to the step of applying the tread band, a further step is provided for anchoring a rim (14) to radially inner end portions (12, 13) of each shell half.

8. A process as claimed in claims 1 or 3, characterized in that application of the tread band is obtained by the following sub-steps:
- manufacturing the tread band (5) separately from the first and second shell halves (2, 3);
- gluing an inner surface of the tread band to radially outer end portions (6, 7) of the shell halves (2, 3) disposed in side by side relationship.

9. A process as claimed in claim 8, characterized in that the tread band (5) is obtained by injection moulding.

10. A tyre for roller skates, cycles and similar non power-driven means of transport, characterized in that it comprises:
- at least one first and one second shell halves (2, 3) disposed symmetrically relative to an equatorial plane (4) of the tyre;
- a tread band (5) peripherally in engagement with the first and second shell halves (2, 3) at radially outer end portions of said shell halves, said tread band and shell halves defining a toroidal cavity (9) of predetermined volume.

11. A tyre as claimed in claim 10, characterized in that the tread band (5) has a connecting surface (8a) intended for mechanically and chemically engaging, in a integral manner, corresponding connecting surfaces (6a, 7a) peripherally defined on the radially outer end portions of the first and second shell halves.

12. A tyre as claimed in claim 10, characterized in that each shell half has a side band (10, 11) consecutive to said radially outer end portion (6, 7) and defining a corresponding sidewall of the tyre, as well as a radially inner end portion (12, 13) consecutive to said side band and arranged to engage a tyre rim.

13. A tyre as claimed in any one of claims 10 to 12, characterized in that the first and second shell halves (2 and 3) are identical with each other.

14. A tyre as claimed in claim 10, characterized in that each shell half has a substantially curved conformation in a meridian section plane.

15. A tyre as claimed in claim 10, characterized in that the radially outer end portions (6, 7) of each shell half (2, 3) have edges disposed in side by side relationship with each other.

16. A tyre as claimed in claim 10, characterized in that the radially outer end portions (6, 7) of each shell half have mutually facing edges disposed at a predetermined axial distance from each other.

17. A tyre as claimed in claim 10, characterized in that each shell half (2, 3) is made of a first elastomer material.

18. A tyre as claimed in claim 10, characterized in that the tread band (5) is made of a second elastomer material.

19. A tyre as claimed in claims 17 and 18, characterized in that the first elastomer material is differentiated and preferably of greater hardness than the second elastomer material.

20. A tyre as claimed in claim 10, characterized in that each shell half (2, 3) at an inner surface thereof turned towards the toroidal cavity has stiffening bands (15, 16) substantially disposed at said side bands (10, 11).

21. A tyre as claimed in claim 12, characterized in that each shell half at said radially inner end portions (12, 13) has corresponding beads (19, 20) for anchoring to the tyre rim.

22. A tyre as claimed in claim 20, characterized in that each anchoring bead (19, 20) comprises circumferential stiffening elements (19a, 20a).

23. A tyre as claimed in claim 12, characterized in that each shell half has radially inner end portions (12, 13) buried into axially-opposite perimetric anchoring regions (17, 18) of the tyre rim (14).

24. A tyre as claimed in claim 10, characterized in that said toroidal cavity (9) holds a gas under a predetermined pressure.

25. A tyre as claimed in claim 24, characterized in that it comprises adjusting means (21) for varying said predetermined pressure.

26. A tyre as claimed in claim 25, characterized in that said adjusting means is operatively engaged at said rim (14) and preferably consists of a valve of the needle type for example.

27. A roller or wheel for skates, cycles and similar non-powered means of transport, characterized in that it involves use of a tyre having the features recited in claims 10 to 26.

28. A skate characterized in that it involves use of a predetermined number of wheels or rollers as claimed in claim 27.

29. A cycle, characterized in that it involves use of a predetermined number of wheels as claimed in claim 27.
